# NEUE EUROPÄISCHE PATENTSCHRIFT

(11) **EP 0 771 599 B2**
(45) Veröffentlichungstag und Bekanntmachung des Hinweises auf die Entscheidung über den Einspruch: **14.01.2004**
(45) Hinweis auf die Patenterteilung: 23.09.1998
(21) Anmeldenummer: 96116921.6
(22) Anmeldetag: 22.10.1996
(51) Int. Cl.: B22C 1/22, C08G 18/54, C08K 5/10

(54) **Bindemittelsystem auf Polyurethan-Basis für Formstoff-Mischungen zur Herstellung von Giessformen und Kernen**
Binder based on polyurethanes for producing foundry mould and core compositions
Liant à base de polyurethanes pour la fabrication de compositions de moules et noyaux de fonderie

(30) Priorität: 01.11.1995 DE 19542752; 15.03.1996 DE 19612017
(43) Veröffentlichungstag der Anmeldung: 07.05.1997
(73) Patentinhaber: Hüttenes-Albertus Chemische-Werke GmbH, 40549 Düsseldorf (DE)
(72) Erfinder: Torbus, Marek, Dr., 46800 Krefeld (DE); Ladegourdie,Gérard Philippe Mario,, 40237 Düsseldorf (DE)
(74) Vertreter: Eisenführ, Speiser & Partner

(56) Entgegenhaltungen:
- EP-A- 0 519 734
- WO-A-95/14735
- DE-A- 2 448 134
- US-A- 3 485 797
- US-A- 4 268 425
- PATENT ABSTRACTS OF JAPAN vol. 95, no. 004, 31.Mai 1995 & JP 07 002971 A (MITSUI TOATSU CHEM INC), 6.Januar 1995,

## Beschreibung

Die Erfindung betrifft die Verwendung von Fettsäuremethylestern als Lösungsmittel in PU Bindemittel-Systemen für Formstoffmischungen für gießformen und Kerne.

Bei der Herstellung von Gießformen und Kernen werden in großem Umfang Bindemittel-Systeme auf Polyurethan-Basis eingesetzt Hierbei handelt es sich um Zweikomponenten-Systeme, deren eine Komponente aus Polyolen mit mindestens zwei OH-Gruppen im Molekül und deren andere Komponente aus Polyisocyanaten mit mindestens zwei NCO-Gruppen im Molekül besteht. Diese beiden Komponenten werden in gelöster Form einem körnigen Formgrundstoff (meistens Sand) zugemischt und durch Zugabe eines Katalysators zur Aushärte-Reaktion gebracht.

In einem typischen Beispiel solcher Systeme ist das Polyol ein freie OH-Gruppen enthaltendes Praekondensat aus Phenol oder Phenolverbindungen mit Aldhehyden (nachfolgend kurz "Phenolharz" genannt) und das Polyisocyanat ein aromatisches Polyisocyanat wie beispielsweise Diphenylmethandiisocyanat. Als Katalysator kommen tertiäre Amine zum Einsatz. Je nach dem, ob man nach dem Coldbox-Verfahren oder dem No-Bake-Verfahren arbeitet, erfolgt die Zugabe des Katalysators entweder zusammen mit den übrigen Bestandteilen des Bindemittelsystems unmittelbar vor der Verarbeitung der Formstoff-Mischung, oder aber erst nach dem Einbringen der zunächst ohne den Katalysator hergestellten Formstoff-Mischung in ein Formwerkzeug, in dem die Mischung mit dem Amin in gasförmigen Zustand begast wird.

Lösungsmittel sind bei derartigen Systemen erforderlich, um die Komponenten des Bindemittels beim Vermischen mit dem Formgrundstoff in einem ausreichend niedrig-viskosen Zustand zu halten. Dies gilt für die Phenolharze, die aufgrund ihrer höheren Viskosität regelmäßig ein Lösungsmittel benötigen, trifft aber auch auf die Polyisocyanate zu. Ein Problem bildet dabei die Tatsache, daß die beiden Bindemittelmittel-Komponenten unterschiedliche Lösungsmittel-Typen benötigen. So sind im allgemeinen unpolare Lösungsmittel gut für Polyisocyanate geeignet und nur weniger gut mit Phenolharzen verträglich, während für polare Lösungsmittel das umgekehrte gilt. In der Praxis werden deshalb normalerweise Gemische von polaren und unpolaren Lösungsmitteln eingesetzt, die auf das jeweilige Bindemittelsystem abgestimmt sind. Die einzelnen Bestandteile dieses Gemischs sollen dabei im übrigen keinen zu niedrigen Siedebereich haben, damit das Lösungsmittel nicht durch Verdunstung zu rasch unwirksam werden kann.

Als unpolare Lösungsmittel dienen bisher bevorzugt hochsiedende aromatische Kohlenwasserstoffe (meistens in Form von Gemischen) mit einem Siedebereich oberhalb von etwa 150° C bei Normaldruck, und als polare Lösungsmittel sind u.a. bestimmte ausreichend hochsiedende Ester zum Einsatz gekommen, wie z.B. die in der DE-A-27 59 262 beschriebenen "symmetrischen" Ester, bei denen sowohl der Säurerest als auch der Alkoholrest eine im gleichen Bereich liegende, relativ große Anzahl von C-Atomen (etwa 6 - 13 C-Atome) aufweist.

In der US-A-4,268,425 A ist ein Zweikomponenten-Bindemittelsystem beschrieben, welches ein freie OH-Gruppen enthaltendes Phenolharz und ein Polysocyanat als Reaktionspartner enthält. Bei diesem Bindemittelsystem besteht, um verbesserte Sandlebenszeiten und Zerfallseigenschaften (insbesondere beim Gießen von Metallen mit niedrigerer Schmelztemperatur) zu erreichen, das Lösungsmittel für das Polysocyanat aus hochsiedenden Aromaten mit einem Zusatz von trocknenden Ölen, während das Phenolharz in den üblichen polaren Lösungsmitteln (ggf. mit einem Zusatz an hochsiedenden Aromaten) gelöst ist. Als trocknendes Öl kann dabei auch Tallölmethylester eingesetzt werden.

Gemäß der WO-A-95/14735 ähnlichen Inhalts werden die Phenolharze bevorzugt in Mischungen aus Estern und aromatischen Lösungsmitteln gelöst. Die Polyisocyanate werden bevorzugt in Mischungen aus aromatischen und aliphatischen Lösungsmitteln gelöst.

Bei allen Vorteilen der Polyurethan-Bindemittel für die Gießereitechnik war es stets ein schwerwiegender Nachteil, daß sie durch Ausdunstungen und Ausgasungen zu einer erheblichen Arbeitsplatzbelastung führen, die auch meist nicht durch Schutzmaßnahmen wie Abzugshauben oder dgl. abgefangen werden kann. Zwar hat die Entwicklung bei den Harzen inzwischen durch Verminderung des Restgehalts an freiem Formaldehyd bzw. freiem Phenol zu Produkten mit sehr geringer Belastung geführt, und auch bei den von Hause aus unangenehmen riechenden Estern hat der Einsatz der vorerwähnten symmetrischen Ester in dieser Hinsicht eine spürbare Verbesserung gebracht, aber geblieben ist das Problem der Arbeitsplatzbelastung durch die hochsiedenden Aromaten, auf die bislang nicht verzichtet werden konnte. Diese Aromaten sind normalerweise alkylsubstituierte Benzole, Toluole und Xylole. Sie können aber auch, um einen möglichst hohen Siedepunkt zu gewährleisten, Verbindungen mit kondensierten Benzolkernen, also Naphtaline usw. enthalten, die zu den gesundheitsgefährdenden Stoffen zählen und nicht nur nach erfolgtem Abguß, sondern auch schon bei dar Herstellung dar Formstoffmischungen freigesetzt werden.

Hier will die Erfindung Abhilfe schaffen.

Dies wird erreicht durch ein Zweikomponenten-Bindemittelsystem gemäß Anspruch 1, ein Zweikomponenten - Bindemittelsystem gemäß Anspruch 2, ein Verfahren gemäß Anspruch 6, eine Verwendung gemäß Anspruch 7, ein Verfahren gemäß Anspruch 8 und eine Verwendung gemäß Anspruch 9. Die Methylmonoester von einer oder mehreren Fettsäuren mit einer Kohlenstoffkette ab 12 C-Atomen werden nachfolgend auch als "Methylester von höheren Fettsäuren" oder kurz "Fettsäuremethylestern" bezeichnet. Sie lassen sich durch Umesterung von üblicherweise als Triglyceride vorliegenden Fetten und Ölen pflanzlichen oder tierischen Ursprungs oder durch Veresterung von Fettsäuren, die aus solchen Fetten und Ölen gewonnen sind, problemlos herstellen.

Rapsölmethylester ist ein typisches Beispiel eines Esters auf Basis pflanzlicher Öle und stellt ein gut geeignetes Lösungsmittel dar, zumal er als Dieselkraftstoff in ausreichender Menge preisgünstig zur Verfügung steht. Ebenso sind jedoch auch die Methylester anderer pflanzlicher Öle, wie beispielsweise des Sojaöls, Leinöls, Sonnenblumenöls, Erdnußöls, Holzöls, Palmöls, Kokosöls, Rizinusöls und/oder Olivenöls einsetzbar. Und auch Seetieröle, Talge und tierische Fette können als Ausgangsstoffe für erfindungsgemäß verwendbare Methylester dienen.

Die als Ausgangsmaterial dienenden Fette und Öle können in beliebiger Mischung vorliegen. Sie müssen auch keine frischen und reinen Natur-Produkte sein; es kann sich ebenso um gehärtete oder sonstwie in der C-Kette veränderte Fette und Öle handeln. Auch Abfallöle und Abfallfette, wie z.B. gebrauchtes Speiseöl oder Frittierfett sind als Ausgangsmaterial für die erfindungsgemäß verwendbaren Methylester einsetzbar. Es ist somit ein weiterer Aspekt der Erfindung, daß für diese umwaltbedenklichen Altmaterialien eine geeignete Verwertungsmöglichkeit zur Verfügung gestellt wird.

Die Erfindung beruht auf der überraschenden Erkenntnis, daß die polare Lösungsmittel darstellenden Fettsäuremethylester überraschenderweise ganz hervorragend die Funktion der bislang erforderlichen unpolaren Lösungsmittel übernehmen und diese damit ganz oder weitgehend ersetzen können. Damit gelingt es erstmals, ein Lösungsmittel zur Verfügung zu stellen, das einheitlich für beide Komponenten eines Polyurethan-Bindemittelsystems geeignet ist und den Einsatz von unpolaren Lösungsmitteln, insbesondere von hochsiedenden Aromaten entbehrlich machen kann. Angesichts der Tatsache, daß alle bisher für Polyurethan-Bindemittelsysteme vorgeschlagenen polaren Lösungsmittel nicht ohne zusätzliche unpolare Lösungsmittel verwendbar sind, war dieses Ergebnis nicht zu erwarten. Vor allem aus Gründen des Umweltschutzes ist ein 100 %-iger Ersatz der hochsiedenden Aromaten durch Fettsäuremethylester erwünscht.

Im übrigen kann es in manchen Fällen angezeigt sein, der Lösung des Phenolharzes im Methylester noch einen die Polarität des Lösungsmittels erhöhenden Zusatz zuzusetzen. Für diesen Zweck sind zahlreiche polare Verbindungen geeignet, beispielsweise ein als "Dibasic Ester" oder kurz "DBE" bezeichnetes Gemisch aus Dimethylestern von C₄ - C₆-Dicarbonsäuren. An den grundsätzlichen Vorteilen der Verwendung von Fettsäuremethylestern als Lösungsmittel für Polyurethan-Bindemittelsysteme ändert sich durch einen solchen polarisierenden Zusatz nichts.

Der schon als typisches Beispiel für die erfindungsgemaß zu verwendenden Lösungsmittel genannte Rapsölmethylester ist ein umweltfreundliches und CO₂-neutrales Naturprodukt. Er ist hochsiedend und ausreichend dünnflüssig, erfüllt also die physikalischen Anforderungen an ein Lösungsmittel für Polyurethan-Bindemittelsysteme. Auch ist er praktisch geruchfrei und arbeitsplatzmäßig als unbedenklich eingestuft. Weiterhin ist er nicht als brennbares Gefahrgut klassifiziert, was den Transport und die Lagerung der damit hergestellten Lösungen wesentlich vereinfacht. Außerdem führt er beim Abguß kaum zu unerwünschten gasförmigen Spaltprodukten, weil die zahlreichen Doppelbindungen (Rapsöl enthält überwiegend einfach- und mehrfach-ungesättigte Fettsäuren) zu festen, nicht ausgasenden Verbindungen reagieren. Die maximal tolerierbaren Arbeitsplatzkonzentrationen werden bei der Verwendung von Rapsölmethylester als Lösungsmittel nicht annähernd erreicht. Im übrigen ergibt Rapsölmethylester auch eine ausgezeichnete Trennwirkung beim Entfernen von Kernen und Formen, so daß der Einsatz von zusätzlichen Trennmitteln nicht erforderlich ist.

Für die anderen Fettsäuremethylester und Fettsäuremethylestermischungen sind analoge Aussagen zutreffend. Herausgehoben sei noch wegen seiner unproblematischen Verarbeitbarkeit der Methylester des Sojaöls. Besonders gute Ergebnisse - im Einzelfall sogar bessere als mit Rapsölmethylester - wurden mit dem Methylester des Leinöls erhalten. Rizinusölmethylester ist insbesondere als Lösungsmittel für das Phenolharz geeignet, kommt allerdings wegen seines Gehalts an OH-Gruppen weniger für die Polyisocyanate in Betracht, und hat dafür den Vorteil, daß er wegen dieser OH-Gruppen in das Polyurethan eingebaut wird. Weitere Methylester sind in der Tabelle I angegeben.

**Tabelle I**

| **Fettsäuremethylester** | | |
|---|---|---|
| | **Schmelzpunkt [°C]** | **Siedepunkt [°C]** |
| Palmitinsäuremethylester | 29,5 | 129 - 133 |
| Stearinsäuremethylester | 38,5 | 443 (bei 747 Torr) |
| Laurinsäuremethylester | 4 | 261 - 262 |
| Ölsäuremethylester | -19 | 215 - 216 (bei 15 Torr) |
| Sorbinsäuremethylester | 5 | 170 |
| Linolsäuremethylester | -35 | 207 - 208 (bei 11 Torr) |
| Linolensäuremethylester | | 207 (bei 14 Torr) |
| Arachinsäuremethylester | 46 - 47 | 215 - 216 (bei 10 Torr) |
| Behensäuremethylester | 53 - 54 | 224 (bei 20 hPa) |

Die nachfolgenden Beispiele sollen die Erfindung erläutern, ohne sie einzuschränken. Die in den Beispielen verwendete Mengenangabe "GT" bedeutet Gewichtsteile. Handelsnamen sind durch "^{(H)}" gekennzeichnet.

In den Beispielen wird die Erfindung, gemäß in der die hochsiedenden Aromaten vollständig durch Fettsäuremethylester ersetzt sind, erläutert und mit Ergebnissen verglichen, die bei Verwendung herkömmlicher Lösungsmittel erzielt wurden. Wenn die Fettsäuremethylester zusammen mit hochsiedenden Aromaten als Lösungsmittel eingesetzt wurden, lagen die Ergebnisse im Bereich zwischen den nachfolgend als "erfindungsgemaß" und "herkömmlich zum Vergleich" dargestellten Ergebnissen.

### Beispiel 1: Herstellung eines Phenolharzes (Praekondensat) (Falsche Zahlenwerte)

In einem Reaktionsgefäß, das mit Kühler, Thermometer und Rührer ausgerüstet war, wurden

| | |
|---|---|
| 385,0 GT | Phenol |
| 176,0 GT | Paraformaldehyd und |
| 1,1 GT | Zinkacetat |

vorgelegt. Der Kühler wurde auf Rückfluß gesetzt. Die Temperatur wurde innerhalb einer Stunde kontinuierlich ansteigend auf 105° C gebracht und zwei bis drei Stunden auf dieser Temperatur gehalten, bis ein Brechungsindex von 1,590 erreicht war. Dann wurde der Kühler auf atmosphärische Destillation umgestellt und die Temperatur innerhalb einer Stunde auf 125 - 126° C erhöht, bis ein Brechungsindex von etwa 1,593 erreicht war. Danach erfolgte eine Vakuumsdestillation bis zu einem Brechungsindex von 1,612. Die Ausbeute betrug 82 - 83 % der eingesetzten Rohstoffe.

Dieses Phenolharz wurde zur Herstellung von Prüfkörpern nach dem Coldbox-Verfahren (Beispiel 2) und auch zur Herstellung von Prüfkörpern nach dem No-Bake-Verfahren (Beispiel 3) eingesetzt.

### Beispiel 2: Coldbox-Verfahren

Aus dem Phenolharz gemäß Beispiel 1 wurden bei Erreichen des Sollwertes Lösungen hergestellt, welche die nachfolgend angegebene Zusammensetzung aufwiesen:

| Erfindungsgemäß ("Harzlösung 2E") | |
|---|---|
| 100,0 GT | Phenolharz gemäß Beispiel 1 |

**TABELLE II**

| **Biegefestigkeit in N/cm**^{**2**} | | | | | | |
|---|---|---|---|---|---|---|
| **Mischung Prüfung** | **sofort verarbeitet** | | | **nach 1 h verarbeitet** | | |
| | **sofort** | **1 h** | **24 h** | **sofort** | **1 h** | **24 h** |
| Kerne 2E | 240 | 500 | 570 | 220 | 500 | 600 |
| Kerne 2V | 290 | 520 | 580 | 270 | 480 | 540 |

Die Tabelle III veranschaulicht einige anwendungstechnische Eigenschaften der Kerne 2E im Vergleich zu den Kernen 2V. Dazu wurden sechs unterschiedliche Prüfreihen durchgeführt, nämlich:
- Reihe 1:: Kerne 1 Tag im Labor gelagert, am nächsten Tag in Wasserschlichte getaucht, luftgetrocknet, nach 1 Tag bzw. 2 Tagen geprüft.
- Reihe 2:: Kerne in Wasserschlichte getaucht, luftgetrocknet, nach 1 bzw. 2 Tagen geprüft.
- Reihe 3:: Kerne 1 Tag im Labor gelagert, am nächsten Tag in Wasserschlichte getaucht, 1 Stunde im Ofen bei 150° C getrocknet, nach Erkalten (*) geprüft.
- Reihe 4:: Kerne in Wasserschlichte getaucht, 1 Stunde im Ofen bei 150° C getrocknet, nach Erkalten (*) geprüft.
- Reihe 5:: Kerne 1 Tag im Labor gelagert, am nächsten Tag bei 100 %-iger RLF gelagert, nach 1 bzw. 2 Tagen geprüft.
- Reihe 6:: Kerne bei 100 %-iger RLF gelagert, nach 1 bzw. 2 Tagen geprüft.

**TABELLE III**

| **Biegefestigkeit in N/cm**^{**2**} | | | | | | | | | | |
|---|---|---|---|---|---|---|---|---|---|---|
| **Prüfungsreihe Prüfzeit (Tage)** | **1** | | **2** | | **3** | **4** | **5** | | **6** | |
| | **1** | **2** | **1** | **2** | ***** | ***** | **1** | **2** | **1** | **2** |
| Kerne 2E | 540 | 560 | 550 | 540 | 550 | 550 | 500 | 520 | 490 | 500 |
| Kerne 2V | 530 | 520 | 560 | 560 | 550 | 580 | 480 | 490 | 500 | 510 |

Die Tabellen II und III lassen erkennen, daß die erfindungsgemäß hergestellten Kerne in allen Fällen praktisch die gleichen Festigkeitswerte wie die herkömmlich hergestellten Kerne aufweisen. Der wesentliche Unterschied besteht darin, daß die Kerne 2E bei ihrer Herstellung und auch beim Gießen keine spürbare Arbeitsplatzbelastung mehr verursachen. Das Verhalten beim Gießen haben labormäßig durchgeführte Probe-Abgüsse bestätigt.

### Beispiel 3: No-Bake-Verfahren

Aus dem Phenolharz gemäß Beispiel 1 wurden Harzlösungen mit folgender Zusammensetzung hergestellt:

| Erfindungsgemäß ("Harzlösung 3E") | |
|---|---|
| 58 GT | Phenolharz |
| 14 GT | Rapsölmethylester und |
| 28 GT | DBE ^{(H)} |

| Herkömmlich zum Vergleich ("Harzlösung 3V") | |
|---|---|
| 58 GT | Phenolharz |
| 28 GT | DBE ^{(H)} |
| 14 GT | Hydrosol AFD ^{(H)} (Gemisch hochsiedender Aromaten) |
| 54,5 GT | Rapsölmethylester und |
| 27,3 GT | DBE ^{(H)} (Gemisch aus Dimethylestern von C₄ - C₆-Dicarbonsäuren). |
| 0,3 % | Aminosilan oder Amidosilan |

| Herkömmlich zum Vergleich ("Harzlösung 2V") | |
|---|---|
| 100,0 GT | Phenolharz gemäß Beispiel 1 |
| 20,0 GT | Isophoron (Cyclisches Keton) |
| 23,0 GT | Triacetin (Glycerintriacetat) |
| 40,0 GT | Solvesso 150 ^{(H)} (C₁₀-C₁₃-Aromatengemisch) |
| 16,7 GT | Plastomoll DOA ^{(H)} (Dioctyladipat) |

Weiterhin wurden folgende Polyisocyanat-Lösungen bereitgestellt:

| Erfindungsgemäß ("Aktivator 2E") | |
|---|---|
| 80 - 85 GT | Diphenylmethandiisocyanat (MDI technisch) |
| 15 - 20 GT | Rapsölmethylester und |
| 0,2 GT | Säurechlorid |

| Herkömmlich zum Vergleich: ("Aktivator 2V") | |
|---|---|
| 77,5 GT | Diphenylmethandiisocyanat (MDI technisch) |
| 19,0 GT | Shellsol R ^{(H)} (Kohlenwasserstoffgemisch mit 85 % Aromaten) |
| 3,0 GT | Essovarsol 60 ^{(H)} (aliphatische und cycloaliphatische Kohlenwasserstoffe) |
| 0,3 GT | Säurechlorid |
| 0,3 GT | Silan. |

Sodann wurden Formstoff-Mischungen hergestellt, indem Quarzsand, Harzlösung und Aktivator in einem Schwingmischer innig vermischt wurden. Mit diesen Mischungen wurden bei einem Schießdruck von 4 bar Prüfkörper (+GF+Riegel) geschossen, die anschließend 10 sec lang bei 4 bar Begasungsdruck mit Dimethylisopropylamin begast und dann 10 sec lang mit Luft gespült wurden. Die Mischungen hatten folgende Zusammensetzung:

| Erfindungsgemäß ("Kerne 2E") | |
|---|---|
| 100 GT | Quarzsand H32 |
| 0,8 GT | Harzlösung 2E und |
| 0,8 GT | Aktivator 2E |

| Herkömmlich zum Vergleich ("Kerne 2V") | |
|---|---|
| 100 GT | Quarzsand H32 |
| 0,8 GT | Harzlösung 2V und |
| 0,8 GT | Aktivator 2V |

Anschließend wurden die Biegefestigkeiten der so erhaltenen Prüfkörper nach der GF-Methode ermittelt. In der Tabelle II sind die Festigkeitswerte der Kerne 2E und der Kerne 2V gegenübergestellt. Dabei wurden die gleichen Untersuchungen einmal mit einer sofort nach dem Vermischen zu Formkörpern verarbeiteten Mischung und zum anderen mit einer nach dem Vermischen (zur Beurteilung der sogenannten "Sandlebenszeit") zunächst 1 Stunde gelagerten und dann zu Formkörpern verarbeiteten Mischung durchgeführt. Die Ermittlung der Festigkeitswerte erfolgte sofort nach dem Begasen (Anfangsfestigkeit) sowie nach 1 Stunde bzw. 24 Stunden nach dem Begasen (Endfestigkeit).

Die für das No-Bake-Verfahren verwendeten Polyisocyanat-Lösungen wiesen folgende Zusammensetzung auf:

| Erfindungsgemäß ("Aktivator 3E") | |
|---|---|
| 85 GT | Diphenylmethandiisocyanat |
| 15 GT | Rapsölmethylester |

| Herkömmlich zum Vergleich ("Aktivator 3V") | |
|---|---|
| 70 GT | Diphenylmethandiisocyanat |
| 30 GT | Hydrosol AFD ^{(H)} |

Sodann wurden in einem Schwingmischer Formstoffmischungen folgender Zusammensetzung hergestellt:

| Erfindungsgemäß ("Mischung 3E") | |
|---|---|
| 100,0 GT | Quarzsand H32 |
| 0,9 GT | Harzlösung 3E |
| 0,9 GT | Aktivator 3E |
| 2,0 % | Phenylpropylpyridin (Prozentangabe bezogen auf die Harzlösung) |

| Herkömmlich zum Vergleich ("Mischung 3V") | |
|---|---|
| 100,0 GT | Quarzsand H32 |
| 0,9 GT | Harzlösung 3V |
| 0,9 GT | Aktivator 3V |
| 2,0 % | Phenylpropylpyridin (Prozentangabe bezogen auf die Harzlösung) |

Diese Mischungen wurden in Formen gestampft und dem Abbinden überlassen. Beide Mischungen hatten nach 2 min angezogen und waren nach 3 min abgebunden. Nach jeweils 1 Stunde, 2 Stunden bzw. 24 Stunden wurden die Biegefestigkeiten der abgebundenen Mischungen ermittelt. Die ermittelten Festigkeitswerte sind in der Tabelle IV einander gegenübergestellt, wobei zu erkennen ist, daß die Festigkeitswerte der erfindungsgemäßen Mischung durchweg deutlich besser sind als die der herkömmlichen Mischung. Zur Arbeitsplatzbelastung gilt das im Beispiel 2 gesagte in gleicher Weise auch hier.

**TABELLE IV**

| **Biegefestigkeit in N/cm**^{**2**} | | | |
|---|---|---|---|
| **Prüfung nach** | **1 h** | **2 h** | **3 h** |
| Mischung 3E | 230 | 320 | 380 |
| Mischung 3V | 170 | 220 | 270 |

## Patentansprüche

1. Zweikomponenten-Bindemittelsystem auf Polyurethan-Basis für Gießerei-Formstoffe, enthaltend
- ein freie OH-Gruppen enthaltendes Phenolharz und
- ein Polyisocyanat
als Reaktionspartner sowie
- Fettsäuremethylester
als Lösungsmittelbestandteil für das Phenolharz und als alleiniges Lösungsmittel oder Lösungsmittelbestandteil für das Polyisocyanat, wobei die Fettsäuremethylester die Methylmonoester von einer oder mehreren Fettsäuren mit einer Kohlenstoffkette ab 12 C-Atomen und aus der Gruppe ausgewählt sind, die aus den
- Methylestern des Rapsöls, Sojaöls, Leinöls, Sonnenblumenöls, Erdnußöls, Holzöls, Palmöls, Kokosöls, Rizinusöls und Olivenöls, den
- Methylestern von Seetierölen, Talgen und tierischen Fetten, den
- Methylestern von Abfallölen und Abfallfetten sowie
- Palmitinsäuremethylester, Stearinsäuremethylester, Laurinsäuremethylester, Ölsäuremethylester, Sorbinsäuremethylester, Linolsäuremethylester, Linolensäuremethylester, Arachinsäuremethylester und Behensäuremethylester
besteht,
wobei der Anteil der Fettsäuremethylester den Anteil ggf. vorhandener hochsiedender aromatischer Kohlenwasserstoffe überwiegt.

2. Zweikomponenten-Bindemittelsystem auf Polyurethan-Basis für Gießerei-Formstoffe, enthaltend eine freie OH-Gruppen enthaltendes Phenolharz und ein Polyisocyanat als Reaktionspartner sowie einen Fettsäuremethylester, **dadurch gekennzeichnet, daß** das Bindemittelsystem einen oder mehrere Fettsäuremethylester enthält die als Lösungsmittelbestandteil für das Phenolharz und als alleiniges Lösungsmittel oder Lösungsmittelbestandteil für das Polyisocyanat dienen und jeweils Methylmonoester einer Fettsäure mit einer Kohlenstoffkette ab 12 C-Atomen sind, wobei das Lösungsmittel des Bindemittelsystems keine hochsiedenden aromatischen Kohlenwasserstoffe umfaßt.

3. Bindemittelsystem nach Anspruch 1 oder 2, enthaltend die Fettsäuremethylester als alleiniges Lösungsmittel für das Polyisocyanat.

4. Bindemittelsystem nach Anspruch 1, enthaltend die Fettsäuremethylester zusammen mit hochsiedenden aromatischen Kohlenwasserstoffen als Lösungsmittel zumindest für das Polyisocyanat, wobei der Anteil der Fettsäuremethylester den Anteil der Kohlenwasserstoffe überwiegt.

5. Bindemittelsystem nach Anspruch 1 oder 2, enthaltend die Fettsäuremethylester zusammen mit Lösungsmitteln höherer Polarität als Lösungsmittel zumindest für das Phenolharz.

6. Verfahren zur Herstellung eines Gießereiformstoff-Bindemittelsystem gemäß einem der Ansprüche 1-5, wobei das Phenolharz und das Polyisocyanat in den Fettsäuremethylestern als Lösungsmittelbestandteil für das Phenolharz und als alleiniges Lösungsmittel oder Lösungsmittelbestandteil für das Polyisocyanat gelöst wird.

7. Verwendung von Methylestern höherer Fettsäuren mit einer Kohlenstoffkette ab 12 C-Atomen als Lösungsmittelbestandteil für das Phenolharz und als alleiniges Lösungsmittel oder Lösungsmittelbestandteil für das Polyisocyanat eines Gießereiformstoff-Bindesmittels auf Polyurethan-Basis, wobei das Phenolharz freie OH-Gruppen enthält und wobei die Lösungsmittel keine hochsiedenden aromatischen Kohlenwasserstoffe enthalten.

8. Verfahren zur Herstellung von Gießerei-Formen und -Kernen aus einer Formstoffmischung, die mittels eines Bindemittelsystems auf Polyurethanbasis gebunden wird, wobei das Bindemittelsystem gemäß einem der Ansprüche 1-5 eingesetzt wird.

9. Verwendung des Bindemittelsystems gemäß einem der Ansprüche 1-5 zum Binden von Formstoffmischungen bei der Herstellung von Gießerei-Formen und -Kernen.

## Claims

1. Two-component binder system based on polyurethane for foundry moulding materials, containing
- a phenolic resin containing free OH groups and
- a polyisocyanate
as reactants, as well as
- fatty acid methyl esters
as solvent constituent for the phenolic resin and as sole solvent or solvent constituent for the polyisocyanate,
wherein the fatty acid methyl esters are the methyl monoesters of one or more fatty acids having a carbon chain of 12 or more C atoms and are selected from the group that consists of the
- methyl esters of rapeseed ioil, soja oil, linseed oil, sunflower oil, peanut oil, wood oil, palm oil, coconut oil, castor oil and olive oil, the
- methyl esters of marine animal iols, tallows and animal fats, the
- methyl esters of waste oils and waste fats as well as
- methyl palmitate, methyl stearate, methyl laurate, methyl oleate, methyl sorbate, methyl linoleate, methyl linolenate, methyl arachidonate and methyl behenate,
wherein the fatty acid methyl ester content is greater than the content of any high-boiling aromatic hydrocarbons that may be present.

2. Two-component binder system based on polyurethane for foundry moulding materials, containing a phenolic resin, containing free OH groups, and a polyisocyanate as reactants, as well as a fatty acid methyl ester, **characterised in that** the binder system contains one or more fatty acid methyl esters which serve as solvent constituent for the phenolic resin and as sole solvent or solvent constituent for the polyisocyanate and are each the methyl monoester of a fatty acid having a carbon chain of 12 or more C atoms, the solvent system of the binder system not containing any high-boiling aromatic hydrocarbons.

3. Binder system according to Claim 1 or 2, containing the fatty acid methyl esters as sole solvent for the polyisocyanate.

4. Binder system according to Claim 1, containing the fatty acid methyl esters together with high-boiling aromatic hydrocarbons as solvent, at least for the polyisocyanate, the fatty acid methyl ester content being greater than the hydrocarbon content.

5. Binder system according to Claim 1 or 2, containing the fatty acid methyl esters together with solvents of higher polarity as solvent, at least for the phenolic resin.

6. Method for the preparation of a foundry moulding material binder system according to one of Claims 1 - 5, wherein the phenolic resin and the polyisocyanate is (sic) dissolved in the fatty acid methyl esters as solvent constituent for the phenolic resin and as sole solvent or solvent constituent for the polyisocyanate.

7. Use of methyl esters of higher fatty acids having a carbon chain of 12 or more C atoms as solvent constituent for the phenolic resin and as sole solvent or solvent constituent for the polyisocyanate of a foundry moulding material binder based on polyurethane, wherein the phenolic resin contains free OH groups and wherein the solvents do not contain any high-boiling aromatic hydrocarbons.

8. Method for the preparation of foundry moulds and cores from a moulding material mixture that is bound by means of a binder system based on polyurethane, wherein the binder system according to one of Claims 1 - 5 is employed.

9. Use of the binder system according to one of Claims 1 - 5 for binding moulding material mixtures in the production of foundry moulds and cores.

## Revendications

1. Système de liant à deux composants à base de polyuréthanne pour des matières à mouler de fonderie, contenant
- une résine phénolique contenant des groupes OH libres et
- un polyisocyanate
comme agent réactif, ainsi
- qu'un ester méthylique d'acide gras
comme composant de solvant pour la résine phénolique et comme unique solvant ou comme composant de solvant pour le polyisocyanate, les esters méthyliques d'acide gras étant les monoesters méthyliques d'un ou de plusieurs acides gras avec une chaîne des carbones à partir de 12 atomes C et choisis dans le groupe, qui se compose des
- esters méthyliques de l'huile de colza, de l'huile de soja, de l'huile de lin, de l'huile de tournesol, de l'huile d'arachide, de l'huile de bois, de l'huile de palme, de l'huile de coco, de l'huile de ricin et de l'huile d'olive,
- des esters méthyliques d'animaux de la mer, de suif et de graisses animales,
- des esters méthyliques d'huiles usagées et de graisses usagées, ainsi que
- de l'ester méthylique d'acide palmitique, de l'ester méthylique d'acide stéarique, de l'ester méthylique d'acide laurique, de l'ester méthylique d'acide oléique, de l'ester méthylique d'acide sorbique, de l'ester méthylique d'acide linoléique, de l'ester méthylique d'acide linolénique, de l'ester méthylique d'acide arachique et de l'ester méthylique d'acide béhénique,
la part en esters méthyliques d'acides gras étant supérieure à la part des hydrocarbures aromatiques lourdes le cas échéant présentes.

2. Système de liant à deux composants à base de polyuréthanne pour des matières à mouler de fonderie, contenant une résine phénolique contenant des groupes OH libres et un polyisocyanate comme agent réactif, ainsi qu'un ester méthylique d'acide gras, **caractérisé en ce que** le système de liant contient un ou plusieurs esters méthyliques d'acide gras qui servent de composants de solvant pour la résine phénolique et comme unique solvant ou composant de solvant pour le polyisocyanate et qui sont respectivement des monoesters méthyliques d'un acide gras avec une chaîne des carbones à partir de 12 atomes C, le solvant du système de liant ne comprenant pas d'hydrocarbures aromatiques lourdes.

3. Système de liant suivant la revendication 1 ou 2, contenant les esters méthyliques d'acides gras comme unique solvant pour le polyisocyanate.

4. Système de liant suivant la revendication 1, contenant les esters méthyliques d'acides gras avec des hydrocarbures aromatiques lourdes comme solvant au moins pour le polyisocyanate, la part en ester méthylique d'acide gras étant supérieure à la part des hydrocarbures.

5. Système de liant suivant la revendication 1 ou 2 contenant les esters méthyliques d'acides gras avec des solvants de polarité plus élevée comme solvant au moins pour la résine phénolique.

6. Procédé de fabrication d'un système de liant de matière à mouler de fonderie suivant une des revendications 1 à 5, la résine phénolique et le polyisocyanate étant dissout dans les esters méthyliques d'acides gras comme composant de solvant pour la résine phénolique et comme unique solvant ou comme composant de solvant pour le polyisocyanate.

7. Utilisation d'esters méthyliques d'acides gras à valence plus élevée avec une chaîne des carbones à partir de 12 atomes C comme composant de solvant pour la résine phénolique et comme unique solvant ou comme composant de solvant pour le polyisocyanate d'un liant de matière à mouler de fonderie à base de polyuréthanne, la résine phénolique contenant des groupes OH libres et les solvants ne contenant pas d'hydrocarbures aromatiques lourdes.

8. Procédé de fabrication de moules et de noyaux de fonderie en un mélange de matières à mouler, qui est lié au moyen d'un système de liant à base de polyuréthanne, le système de liant utilisé étant celui suivant une des revendications 1 à 5.

9. Utilisation d'un système de liant suivant une des revendications 1 à 5 destiné à lier des mélanges de matières à mouler lors de la fabrication de moules et de noyaux de fonderie.
